# EUROPÄISCHE PATENTSCHRIFT

(11) **EP 2 134 966 B1**
(45) Veröffentlichungstag und Bekanntmachung des Hinweises auf die Patenterteilung: **15.03.2017**
(21) Anmeldenummer: 08701671.3
(22) Anmeldetag: 25.01.2008
(51) Int. Cl.: F04B 1/04, F16C 17/02

(54) **PUMPE, INSBESONDERE KRAFTSTOFFHOCHDRUCKPUMPE**
PUMP, IN PARTICULAR HIGH-PRESSURE FUEL PUMP
POMPE, NOTAMMENT POMPE DE CARBURANT À HAUTE PRESSION

(30) Priorität: 08.03.2007 DE 102007011319
(43) Veröffentlichungstag der Anmeldung: 23.12.2009
(73) Patentinhaber: Robert Bosch GmbH, 70442 Stuttgart (DE)
(72) Erfinder: MEIER, Gerhard, 73614 Schorndorf (DE); MERZ, Armin, 71384 Weinstadt (DE); DUTT, Andreas, 70469 Stuttgart (DE); MAURER, Frank, 73730 Esslingen (DE); GINSEL, Thomas, 70839 Gerlingen (DE)
(86) Internationale Anmeldenummer: PCT/EP2008/050874
(87) Internationale Veröffentlichungsnummer: WO 2008/107227

(56) Entgegenhaltungen:
- DE-A1- 19 704 752
- DE-A1- 19 827 926
- GB-A- 2 225 614

## Beschreibung

### Stand der Technik

Die Erfindung geht aus von einer Pumpe, insbesondere Kraftstoffhochdruckpumpe nach der Gattung des Anspruchs 1.

Eine solche Pumpe in Form einer Kraftstoffhochdruckpumpe ist durch die DE 198 48 040 A1 bekannt. Diese Pumpe weist ein Gehäuse auf und eine Antriebswelle, durch die wenigstens ein Pumpenelement der Pumpe bewegt wird. Die Antriebswelle ist im Gehäuse über wenigstens eine als Gleitlager ausgebildete Lagerstelle drehbar gelagert. In der Lagerstelle kann eine zwischen der Antriebswelle und dem Gehäuse angeordnete Lagerbuchse vorgesehen sein. Die Antriebswelle bewegt mit einem zwischen zwei Lagerstellen angeordneten Exzenter oder Nocken wenigstens einen Pumpenkolben als Pumpenelement in einer Hubbewegung. Der Lastangriffspunkt der Antriebswelle liegt im Bereich des Exzenters oder Nockens. Im dem Lastangriffspunkt zugewandten axialen Randbereich der Lagerstelle ergibt sich die höchste Pressung in der Lagerstelle, während mit zunehmendem axialem Abstand vom Lastangriffspunkt die Pressung in der Lagerstelle schnell abnimmt. Somit ist die Lagerstelle nur im Randbereich hoch belastet, während der übrige Bereich der Lagerstelle kaum belastet ist. Um eine Lagerung der Antriebswelle mit ausreichender Belastbarkeit und Haltbarkeit sicherzustellen muss die Lagerstelle entsprechend der Belastung in deren Randbereich dimensioniert werden. Hierzu muss insbesondere deren Durchmesser relativ groß dimensioniert werden, was zu einem entsprechend großen Durchmesser und hohem Gewicht der Antriebswelle und der Lagerbuchse führt. Hierdurch werden wiederum hohe Fertigungskosten verursacht.

Durch die DE 197 04 752 A1 ist eine Pumpe bekannt, die ein Gehäuse aufweist, in dem eine Antriebswelle, durch die wenigstens ein Pumpenelement bewegt wird, über wenigstens eine Lagerstelle drehbar gelagert ist. Die Lagerstelle ist als Wälzlager in Form eines Kugellagers ausgebildet und die Antriebswelle weist in ihrem aus der Lagerstelle herausragenden Endbereich, durch den das Pumpenelement bewegt wird, einen kleineren Durchmesser auf als im Bereich der Lagerstelle. Bei einer Belastung der Antriebswelle beim Antrieb des Pumpenelements kann sich der Endbereich der Antriebswelle elastisch verformen und die Antriebswelle kann in der Lagerstelle verkippen. Hierdurch werden erhöhte Belastungen des axialen Randbereichs der Lagerstelle vermieden. Die Verwendung von Wälzlagern führt zu hohen Kosten und Wälzlager benötigen einen größeren Bauraum als Gleitlager.

Durch die DE 198 27 926 A1 und GB 2 225 614 A sind ebenfalls Pumpen bekannt, bei denen in einem Gehäuse eine Antriebswelle über als Wälzlager in Form von Kugellagern ausgebildete Lagerstellen gelagert sind. Die Antriebswelle der Pumpe gemäß der GB 2 225 614 A weist wie bei der DE 197 04 752 A1 in ihrem aus der Lagerstelle herausragenden Endbereich, durch den das Pumpenelement bewegt wird, einen kleineren Durchmesser auf als im Bereich der Lagerstelle. Somit ergibt sich bei Belastung der Antriebswelle derselbe Effekt wie vorstehend zur Pumpe gemäß der DE 197 04 752 A1 beschrieben. Die Antriebswelle der Pumpe gemäß der DE 198 27 926 A1 weist eine Längsbohrung auf, die auch im Bereich der Lagerstelle verläuft und die dazu dient Schmierstoff durch die Antriebswelle hindurch zum Kontaktbereich zwischen der Antriebswelle und dem Pumpenelement zuzuführen. Bei einer Belastung der Antriebswelle beim Antrieb des Pumpenelements kann die Antriebswelle in den Kugellagern verkippen wodurch erhöhte Belastungen des axialen Randbereichs der Lagerstellen vermieden werden.

### Offenbarung der Erfindung

### Vorteile der Erfindung

Die erfindungsgemäße Pumpe mit den Merkmalen gemäß Anspruch 1 hat demgegenüber den Vorteil, dass die Lagerstelle durch die elastische Verformbarkeit des Gehäuses und/oder der Antriebswelle über ihre axiale Erstreckung gleichmäßiger belastet ist, wobei sich insbesondere im Randbereich der Lagerstelle eine verringerte Belastung ergibt. Dies ermöglicht eine schwächere Dimensionierung der Lagerstelle mit entsprechenden Vorteilen hinsichtlich des Gewichts und der Fertigungskosten.

In den abhängigen Ansprüchen sind vorteilhafte Ausgestaltungen und Weiterbildungen der erfindungsgemäßen Pumpe angegeben.

### Zeichnung

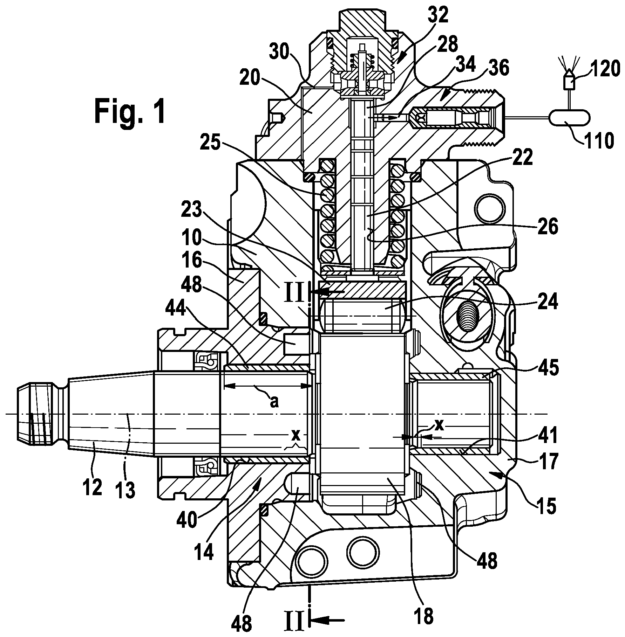

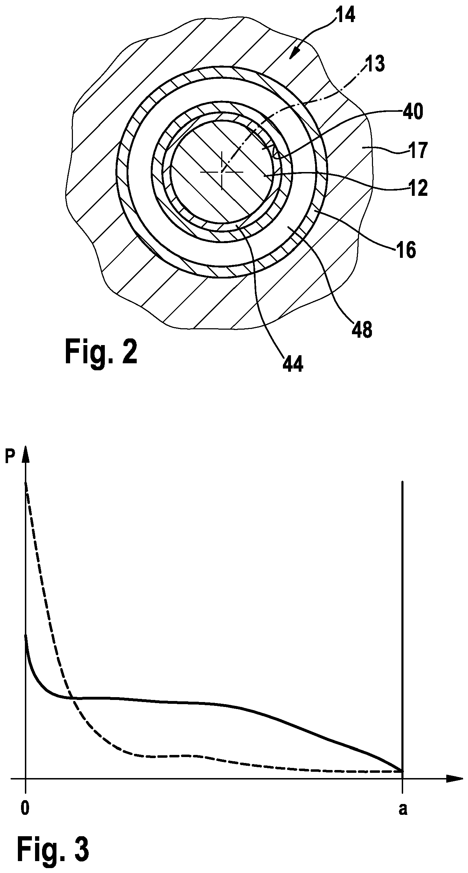

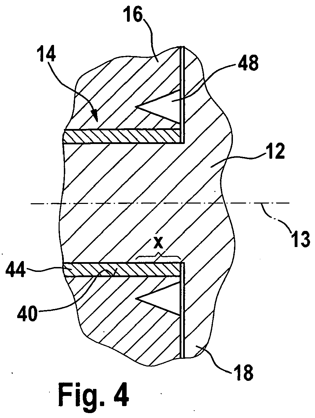

Mehrere Ausführungsbeispiele der Erfindung sind in der Zeichnung dargestellt und in der nachfolgenden Beschreibung näher erläutert. Es zeigen Figur 1 eine Pumpe in einem Längsschnitt gemäß einem ersten Ausführungsbeispiel, Figur 2 die Pumpe in einem Querschnitt entlang Linie II-II in Figur 1, Figur 3 ein Diagramm mit dem Verlauf der Pressung in einer Lagerstelle über deren axiale Erstreckung und Figur 4 einen in Figur 1 mit IV bezeichneten Ausschnitt der Pumpe in vergrößerter Darstellung gemäß einem zweiten Ausführungsbeispiel.

### Beschreibung der Ausführungsbeispiele

In den Figuren 1, 2 und 4 ist eine Pumpe dargestellt, die insbesondere eine Kraftstoffhochdruckpumpe für eine Kraftstoffeinspritzeinrichtung einer Brennkraftmaschine ist. Die Hochdruckpumpe weist ein Gehäuse 10 auf, das mehrteilig ausgebildet sein kann und in dem eine rotierend angetriebene Antriebswelle 12 angeordnet ist. Die Antriebswelle 12 ist im Gehäuse 10 über zwei in Richtung der Drehachse 13 der Antriebswelle 12 voneinander beabstandete Lagerstellen 14 und 15 drehbar gelagert. Die Lagerstellen 14,15 können in verschiedenen Teilen 16,17 des Gehäuses 10 angeordnet sein und werden nachfolgend noch näher erläutert.

In einem zwischen den beiden Lagerstellen 14, 15 liegenden Bereich weist die Antriebswelle 12 wenigstens einen Nocken 18 oder Exzenter auf, wobei der Nocken 18 auch als Mehrfachnocken ausgebildet sein kann. Die Hochdruckpumpe weist wenigstens ein oder mehrere in jeweils einem Gehäuseteil 20 angeordnete Pumpenelemente mit jeweils einem Pumpenkolben 22 auf, der durch den Nocken 18 der Antriebswelle 12 mittelbar in einer Hubbewegung in zumindest annähernd radialer Richtung zur Drehachse 13 der Antriebsewelle 12 angetrieben wird. Der Pumpenkolben 22 stützt sich beispielsweise über einen Stößel 23 und eine in diesem drehbar gelagerte Rolle 24 am Nocken 18 ab. Der Pumpenkolben 22 und der Stößel 23 werden durch eine vorgespannte Feder 25 zum Nocken 18 hin beaufschlagt. Der Pumpenkolben 22 ist in einer Zylinderbohrung 26 im Gehäuseteil 20 dicht verschiebbar geführt und begrenzt mit seiner der Antriebswelle 12 abgewandten Stirnseite in der Zylinderbohrung 26 einen Pumpenarbeitsraum 28. Der Pumpenarbeitsraum 28 weist über einen im Gehäuse 10 verlaufenden Kraftstoffzulaufkanal 30 eine Verbindung mit einem Kraftstoffzulauf, beispielsweise einer Förderpumpe auf. An der Mündung des Kraftstoffzulaufkanals 30 in den Pumpenarbeitsraum 28 ist ein in den Pumpenarbeitsraum 28 öffnendes Einlassrückschlagventil 32 angeordnet. Der Pumpenarbeitsraum 28 weist ausserdem über einen im Gehäuseteil 20 verlaufenden Kraftstoffablaufkanal 34 eine Verbindung mit einem Auslass auf, der beispielsweise mit einem Hochdruckspeicher 110 verbunden ist. Mit dem Hochdruckspeicher 110 sind ein oder vorzugsweise mehrere an den Zylindern der Brennkraftmaschine angeordnete Injektoren 120 verbunden, durch die Kraftstoff in die Zylinder der Brennkraftmaschine eingespritzt wird. An der Mündung des Kraftstoffablaufkanals 34 in den Pumpenarbeitsraum 28 ist ein aus dem Pumpenarbeitsraum 28 öffnendes Auslassrückschlagventil 36 angeordnet.

Bei der Drehbewegung der Antriebswelle 12 wird der Pumpenkolben 24 zumindest mittelbar in einer Hubbewegung angetrieben. Beim Saughub des Pumpenkolbens 22, bei dem sich dieser radial nach innen bewegt, wird der Pumpenarbeitsraum 28 durch den Kraftstoffzulaufkanal 30 bei geöffnetem Einlassventil 32 mit Kraftstoff befüllt, wobei das Auslassventil 36 geschlossen ist. Der Pumpenkolben 22 wird bei dessen Saughub durch die Feder 25 über den Stößel 23 und die Rolle 24 in Anlage am Nocken 18 bzw. Exzenter gehalten. Beim Förderhub des Pumpenkolbens 22, bei dem sich dieser radial nach aussen bewegt, wird durch den Pumpenkolben 22 Kraftstoff unter Hochdruck durch den Kraftstoffablaufkanal 34 bei geöffnetem Auslassventil 36 zum Hochdruckspeicher 110 gefördert, wobei das Einlassventil 32 geschlossen ist.

Die Lagerstellen 14,15 der Antriebswelle 12 sind als Gleitlager ausgebildet, wobei das jeweilige Gehäuseteil 16,17 jeweils eine Bohrung 40,41 aufweist, in der ein Abschnitt der Antriebswelle 12 angeordnet ist. Zwischen der Antriebswelle 12 und den Bohrungen 40,41 der Gehäuseteile 16,17 ist vorzugsweise jeweils eine Lagerbuchse 44,45 angeordnet, die aus einem Werkstoff mit ausreichender Festigkeit und Verschleißbeständigkeit und mit guten Gleiteigenschaften besteht. Im Bereich des Nockens 18 bzw. Exzenters zwischen den Lagerstellen 14,15 ist der Lastangriffspunkt der Antriebswelle 12 und diese Last muss über die Lagerstellen 14,15 abgestützt werden. Erfindungsgemäß ist vorgesehen, dass wenigstens eines der Gehäuseteile 16,17 und/oder die Antriebswelle 12 zumindest in dem dem Nocken 18 bzw. Exzenter der Antriebswelle 12 zugewandten axialen Randbereich X wenigstens einer Lagerstelle 14,15 derart ausgebildet ist, dass sich das Gehäuseteil 16,17 und/oder die Antriebswelle 12 bei Belastung der Antriebswelle 12 beim Förderhub des wenigstens einen Pumpenkolbens 22 senkrecht zur Drehachse 13 der Antriebswelle 12 elastisch verformen kann. Die Gehäuseteile 16,17 können beispielsweise aus Leichtmetall, insbesondere Aluminium oder einer Aluminiumlegierung hergestellt sein.

Bei einem in Figur 1 dargestellten ersten Ausführungsbeispiel der Kraftstoffhochdruckpumpe ist in dem die Bohrung 40 umgebenden Bereich des Gehäuseteils 16 eine Aussparung oder Ausnehmung 48 vorgesehen. Die Aussparung 48 verläuft mit geringem radialem Abstand von der Bohrung 40 zumindest koaxial zur Bohrung 40. Die Aussparung 48 erstreckt sich ausgehend von einer dem Nocken 18 bzw. Exzenter der Antriebswelle 12 zugewandten Stirnseite des Gehäuseteils 16, an der auch die Bohrung 40 mündet, in Richtung der Drehachse 13 der Antriebswelle 12 in das Gehäuseteil 16 hinein. Die Aussparung 48 bildet somit eine den dem Nocken 18 bzw. Exzenter der Antriebswelle 12 zugewandten axialen Randbereich X der Lagerstelle 14 umgebende Ringnut. Die Aussparung 48 kann im Querschnitt wie in Figur 1 in der oberen Hälfte dargestellt beispielsweise rechteckförmig ausgebildet sein oder wie in Figur 1 in der unteren Hälfte dargestellt etwa u-förmig gerundet. Die Aussparung 48 kann bereits bei der Herstellung des Gehäuseteils 16, das beispielsweise als Gussteil ausgebildet ist, eingeformt werden oder nachträglich mittels einer spanabhebenden Bearbeitung in das Gehäuseteil 16 eingebracht werden. Durch die Aussparung 48 erhält das Gehäuseteil 16 im dem Nocken 18 bzw. Exzenter der Antriebswelle 12 zugewandten axialen Randbereich X der Lagerstelle 14 eine Elastizität in radialer und damit senkrechter Richtung zur Drehachse 13 der Antriebswelle 12, so dass sich das Gehäuseteil 16 dort bei Belastung der Antriebswelle 12 beim Förderhub des Pumpenkolbens 22 elastisch verformen kann. In dem Bereich, in dem die Aussparung 48 nicht mehr ausgebildet ist, weist das Gehäuseteil 16 eine große Steifigkeit auf und kann sich bei Belastung der Antriebswelle 12 nicht oder nur wenig elastisch verformen.

In Figur 3 ist der Verlauf der Pressung p in der Lagerstelle 14 über deren axiale Erstreckung s qualitativ dargestellt. Die axiale Erstreckung 0 ist dabei der dem Nocken 18 bzw. Exzenter der Antriebswelle 12 zugewandte Rand der Lagerstelle 14 und die axiale Erstreckung a ist die Breite der Lagerstelle 14. Mit gestrichelter Linie ist der Verlauf der Pressung p dargestellt bei einem Gehäuseteil 16 ohne die Aussparung 48 dargestellt. Es ist in Figur 3 ersichtlich, dass die Pressung p am dem Nocken 18 bzw. Exzenter der Antriebswelle 12 zugewandten Rand der Lagerstelle 14 sehr hoch ist und mit zunehmendem axialem Abstand s vom Rand stark abnimmt. Der Verlauf der Pressung p bei mit der Aussparung 48 versehenem Gehäuseteil 16 ist in Figur 3 mit durchgezogener Linie dargestellt. Im Vergleich zu dem gestrichelten Verlauf wird deutlich, dass bei dem mit der Aussparung 48 versehenen Gehäuseteil 16 die Pressung p am dem Nocken 18 bzw. Exzenter der Antriebswelle 12 zugewandten Rand der Lagerstelle 14 wesentlich geringer ist und dass die Pressung mit zunehmendem axialem Abstand s vom Rand weniger stark abnimmt. Dies bedeutet, dass die Pressung p über die axiale Erstreckung s der Lagerstelle 14 infolge der elastischen Verformbarkeit des Gehäuseteils 16 gleichmäßiger verteilt ist und nicht nur der Rand der Lagerstelle 14 trägt sondern auch ein in axialer Richtung betrachtet mittlerer Bereich trägt. Dies ermöglicht eine kleinere Dimensionierung der Lagerstelle 14 mit kleinerem Durchmesser der Antriebswelle 12 und der Lagerbuchse 44.

In Figur 4 ist das Gehäuseteil 16 mit einer gegenüber Figur 3 modifizierten Aussparung 48 dargestellt, die hier im Querschnitt v-förmig ausgebildet ist, wobei sich die radiale Erstreckung der Aussparung 48 mit zunehmendem axialem Abstand s vom dem Nocken 18 bzw. Exzenter der Antriebswelle 12 zugewandten Rand der Lagerstelle 14 verringert. Durch die Größe und Form der Aussparung 48 kann eine elastische Verformbarkeit des Gehäuseteils 16 in beabsichtigem Ausmaß und damit ein Verlauf der Pressung p über der axialen Erstreckung s der Lagerstelle 14 gemäß Figur 3 erreicht werden. In gleicher Weise wie vorstehend anhand der Figuren 1 und 4 für das Gehäuseteil 16 beschrieben kann alternativ oder zusätzlich auch das Gehäuseteil 17 in seinem dem Nocken 18 bzw. Exzenter der Antriebswelle 12 zugewandten Randbereich X der Lagerstelle 15 mit einer Aussparung 48 versehen sein.

In Figur 5 ist anstelle des Gehäuseteils 16 die Antriebswelle 12 so ausgebildet, dass diese sich in dem ihrem Nocken 18 bzw. Exzenter zugewandten axialen Randbereich X der Lagerstelle 14 bei Belastung senkrecht zu ihrer Drehachse 13 elastisch verformen kann. Hierzu ist die Wandstärke der Antriebswelle 12 im Randbereich X der Lagerstelle 14 durch eine in diese eingebrachte Bohrung 50 verringert. Der Durchmesser der Bohrung 50 ist dabei außerhalb der Lagerstelle 14 bis zum axialen Rand der Lagerstelle 14 etwa konstant und nimmt dann innerhalb der Lagerstelle 14 mit zunehmendem axialem Abstand vom Rand ab, wobei die Bohrung 50 dort beispielsweise etwa konisch spitz zuläuft. Ab dem in axialer Richtung betrachtet mittleren Bereich der Lagerstelle 14 ist die Antriebswelle 12 somit massiv mit vollem Querschnitt ausgebildet und weist eine entsprechend große Steifigkeit auf. In Figur 6 ist eine gegenüber Figur 5 modifizierte Ausführung der Antriebswelle 12 dargestellt, bei der die Bohrung 50 sich in axialer Richtung über den dem Nocken 18 bzw. Exzenter der Antriebswelle 12 zugewandten Rand der Lagerstelle 14 hinaus erstreckt, jedoch nicht ganz bis zur axialen Mitte der Lagerstelle 14. Der Endbereich der Bohrung 50 kann dabei konisch ausgebildet sein. Durch die Ausführungen der Antriebswelle 12 gemäß den Figuren 5 und 6 wird eine elastische Verformung der Antriebswelle 12 im axialen Randbereich X der Lagerstelle 14 ermöglicht, so dass ein Verlauf der Pressung p wie in Figur 3 mit durchgezogener Linie dargestellt erreicht wird.

Die beiden vorstehend erläuterten Maßnahmen mit der Aussparung 48 im Gehäuseteil 16,17 und der Bohrung 50 in der Antriebswelle 12 können auch miteinander kombiniert werden.

## Patentansprüche

1. Pumpe, insbesondere Kraftstoffhochdruckpumpe, mit einem Gehäuse (10,16,17), mit einer Antriebswelle (12), durch die wenigstens ein Pumpenelement (22) bewegt wird, wobei die Antriebswelle (12) im Gehäuse (10,16,17) über wenigstens eine als Gleitlager ausgebildete Lagerstelle (14,15) drehbar gelagert ist, **dadurch gekennzeichnet, dass** in wenigstens einem einem Lastangriffsbereich (18) der Antriebswelle (12) zum wenigstens einen Pumpenelement (22) zugewandten axialen Randbereich (X) der wenigstens einen Lagerstelle (14,15) das Gehäuse (16,17) derart im Querschnitt vermindert ist, dass sich bei Belastung der Antriebswelle (12) beim Antrieb des wenigstens einen Pumpenelements (22) das Gehäuse (16,17) im axialen Randbereich (X) der wenigstens einen Lagerstelle (14,15) senkrecht zur Drehachse (13) der Antriebswelle (12) elastisch verformt, dass das Gehäuse (16,17) für die wenigstens eine Lagerstelle (14,15) eine Bohrung (40,41) aufweist und dass mit radialem Abstand zur Bohrung (40,41) im Gehäuse (16,17) eine Aussparung (48) vorgesehen ist, die sich in axialer Richtung im axialen Randbereich (X) der Lagerstelle (14,15) erstreckt und dass die Aussparung (48) in Form einer Ringnut die Bohrung (40,41) im Gehäuse (16,17) zumindest annähernd koaxial umgibt.

2. Pumpe nach Anspruch 1, **dadurch gekennzeichnet, dass** durch die elastische Verformung des Gehäuses (16,17) und/oder der Antriebswelle (12) die Pressung (p) in der wenigstens einen Lagerstelle (14,15) in deren axialen Randbereich (X) verringert wird und in deren mittleren axialen Bereich erhöht wird gegenüber der Pressung (p) in der wenigstens einen Lagerstelle (14,15) bei steifer Ausbildung des Gehäuses (16,17) und der Antriebswelle (12).

3. Pumpe nach einem der vorstehenden Ansprüche, **dadurch gekennzeichnet, dass** das Gehäuse (16,17) aus Leichtmetall, insbesondere Aluminium oder einer Aluminiumlegierung besteht.

## Claims

1. Pump, in particular high-pressure fuel pump, having a housing (10, 16, 17), having a drive shaft (12) by way of which at least one pump element (22) is moved, wherein the drive shaft (12) is rotatably mounted in the housing (10, 16, 17) by way of at least one bearing point (14, 15) in the form of a plain bearing, **characterized in that**, in at least one axial edge region (X), facing toward a load action region (18) of the drive shaft (12) with respect to the at least one pump element (22), of the at least one bearing point (14, 15), the housing (16, 17) is of reduced cross section such that, when the drive shaft (12) is subjected to load when driving the at least one pump element (22), the housing (16, 17) elastically deforms, in the axial edge region (X) of the at least one bearing point (14, 15), perpendicularly to the axis of rotation (13) of the drive shaft (12), **in that** the housing (16, 17) has a bore (40, 41) for the at least one bearing point (14, 15), and **in that**, at a radial distance from the bore (40, 41) in the housing (16, 17), there is provided a recess (48) which extends in an axial direction in the axial edge region (X) of the bearing point (14, 15), and **in that** the recess (48), in the form of a ring-shaped groove, at least approximately coaxially surrounds the bore (40, 41) in the housing (16, 17).

2. Pump according to Claim 1, **characterized in that**, by way of the elastic deformation of the housing (16, 17) and/or of the drive shaft (12), the contact pressure (p) in the at least one bearing point (14, 15) is reduced in the axial edge region (X) thereof, and is increased in the middle axial region thereof, in relation to the contact pressure (p) in the at least one bearing point (14, 15) in the case of a rigid form of the housing (16, 17) and of the drive shaft (12).

3. Pump according to one of the preceding claims, **characterized in that** the housing (16, 17) is composed of light metal, in particular of aluminium or an aluminium alloy.

## Revendications

1. Pompe, en particulier pompe à carburant haute pression, comprenant un boîtier (10, 16, 17), avec un arbre d'entraînement (12) par lequel au moins un élément de pompe (22) est déplacé, l'arbre d'entraînement (12) étant supporté dans le boîtier (10, 16, 17) par le biais d'au moins un point de palier (14, 15) réalisé sous forme de palier lisse, **caractérisée en ce que** dans au moins une région de bord axiale (X) de l'au moins un point de palier (14, 15) tournée vers une région d'engagement de charge (18) de l'arbre d'entraînement (12) vers au moins un élément de pompe (22), le boîtier (16, 17) présente une section transversale réduite de telle sorte que lors de la sollicitation de l'arbre d'entraînement (12), lors de l'entraînement de l'au moins un élément de pompe (22), le boîtier (16, 17) se déforme élastiquement dans la région de bord (X) de l'au moins un point de palier (14, 15) perpendiculairement à l'axe de rotation (13) de l'arbre d'entraînement (12), **en ce que** le boîtier (16, 17) présente un alésage (40, 41) pour l'au moins un point de palier (14, 15) et **en ce qu'**un évidement (48) est prévu à distance radiale de l'alésage (40, 41) dans le boîtier (16, 17), lequel s'étend dans la direction axiale dans la région de bord axiale (X) du point de palier (14, 15) et **en ce que** l'évidement (48) entoure l'alésage (40, 41) sous forme de rainure annulaire dans le boîtier (16, 17) de manière au moins approximativement coaxiale.

2. Pompe selon la revendication 1, **caractérisée en ce que** du fait de la déformation élastique du boîtier (16, 17) et/ou de l'arbre d'entraînement (12), le pressage (p) est réduit dans l'au moins un point de palier (14, 15) dans sa région de bord axiale (X) et est augmenté dans sa région axiale centrale par rapport au pressage (p) dans l'au moins un point de palier (14, 15) lors d'une réalisation plus rigide du boîtier (16, 17) et de l'arbre d'entraînement (12).

3. Pompe selon l'une quelconque des revendications précédentes, **caractérisée en ce que** le boîtier (16, 17) se compose de métal léger, en particulier d'aluminium ou d'un alliage d'aluminium.
